# EUROPÄISCHE PATENTSCHRIFT

(11) **EP 2 103 533 B1**
(45) Veröffentlichungstag und Bekanntmachung des Hinweises auf die Patenterteilung: **27.04.2011**
(21) Anmeldenummer: 09155781.9
(22) Anmeldetag: 20.03.2009
(51) Int. Cl.: B65D 1/24, B29C 45/26

(54) **Einstückig aus Kunststoff hergestellter Flaschenträger und zu seiner Herstellung dienendes Formwerkzeug**
Integrated plastic bottle crate and forming tool for the production thereof
Caisse de bouteilles en une seule pièce en matière plastique et outil de formage servant à sa fabrication

(30) Priorität: 20.03.2008 DE 102008015382
(43) Veröffentlichungstag der Anmeldung: 23.09.2009
(73) Patentinhaber: Linpac Allibert GmbH, 63165 Mühlheim/Main (DE)
(72) Erfinder: Otte, Reinhard, 32107 Bad Salzuflen (DE); Bienert, Burkhard, 32107 Bad Salzuflen (DE)
(74) Vertreter: Rummler, Felix

(56) Entgegenhaltungen:
- EP-A- 0 260 698
- EP-A- 0 739 824
- BE-A3- 1 009 820
- CH-A5- 689 759
- DE-A1-102004 023 044
- DE-A1-102004 033 461

## Beschreibung

Die Erfindung betrifft einen einstückig aus Kunststoff hergestellten Flaschenträger in Form eines für zwei Reihen von Flaschen konzipierten Kastens mit einem von zwei durch Flaschenfachwänden abgestutzten, am Boden befestigten Säulen getragenen Handgriff und ein zu seiner Herstellung dienendes Formwerkzeug.

Solche Flaschenträger sind bekannt und werden vornehmlich für den Transport von Ein-Liter-Flaschen eingesetzt. Da diese Flaschen eine erheblich größere Hohe als die Halb-Liter Bierflaschen haben, ergeben sich Schwierigkeiten bei der Konstruktion und Formung des in der Kastenmitte angeordneten Handgriffes und der ihn tragenden Saulen. Deren Länge erfordert eine hohe Stabilität, das für die Herstellung eingesetzte Formwerkzeug muss ebenfalls für die Formung dieser hohen Säulen erheblicher Länge besonders stabil ausgeführt werden, was im Stande der Technik nicht immer mit Erfolg gelungen ist.

BE-A3-1 009 820 offenbart einen Kasten für Flaschen aus Kunststoff laut dem Obergriff des unabhängigen Anspruchs 1 wobei der Griff so geformt, dass wenn der Kasten auf einem gleichgeformten Kasten gestapelt wird, der des unteren Kastens Griff ist sich durch die Öffnung in den Griff des oberen Kastens erstreckt so dass der Boden des oberen Kastens auf den Seiten des unteren Kastens aufsitzen kann. EP-A-0 260 698 offenbart auch einen Kasten für Flaschen aus Kunststoff laut dem Obergriff des unabhängigen Anspruchs 1 wobei eine Vielzahl von eng beieinander liegenden Lamellen auf mindestens einem Abschnitt mindestens eines Griffs angeordnet ist.

Die Erfindung vermeidet die Nachteile des Standes der Technik. Es ist die Aufgabe der Erfindung, einen Flaschenträger der eingangs genannten Art von besonders robuster und stabiler Ausführung bei geringem Materialverbrauch zu schaffen, der sich angenehm tragen lässt.

Die Erfindung besteht darin, dass mittig in Richtung der Längsachse angeordnet im Boden eine unter dem Handgriff liegende längliche Ausnehmung angeordnet ist, dass an den beiden in der Längsachse des Kastens liegenden Enden dieser Ausnehmung die zwei den Handgriff an ihren oberen Enden tragenden Säulen angeordnet sind, die jede in ihrem unteren Teil die Form einer nicht geschlossenwandigen Halbsäule haben und im oberen Teil in die Form einer geschlossenwandigen Säule übergehen, an die der Handgriff angeformt ist und dass an oder neben den den Handgriff tragenden Halbsäulen in Bodennahe im Querschnitt halbkreisförmige Säulenstümpfe angeordnet sind, deren Wandungsstärke so bemessen ist, dass sie federn.

Diese Ausführung eines Flaschenträgers gestattet es, bei seiner Herstellung ein in die geschlossene Herstellungsform vom Boden her besonders breites und langes und dadurch besonders stabiles Schwert großer Querschnittsflache hineinragen zu lassen, welches auch bei den Anforderungen besonders schneller Taktzeiten der Produktion immer hochgenau an seinem Platz unverrückbar stehen bleibt und dadurch eine hochgenaue Produktion ohne Ausfallzeiten durch notwendige Reparaturen gewährleistet. Zur Festlegung der in den Ecken dieses Flaschenträgers stehenden Flaschen ist es zweckmäßig. dass an oder neben den den Handgriff tragenden Halbsäulen in Bodennahe im Querschnitt halbkreisförmige Säulenstümpfe angeordnet sind, deren Wandungsstärke so bemessen ist, dass sie federn.Diese halten die Flaschen verdrehungssicher auf ihren Plätzen, was man nutzen kann, um ihre Etiketten von außen durch Fenster im Kasten des Flaschenträgers sichtbar bleiben zu lassen.

Es ist bei diesem Flaschenträger vorteilhaft, wenn der Handgriff die Form eines nach unten offenen U hat, dessen innerer Hohlraum durch parallel angeordnete Lamellen gefüllt ist, die sich von einer Seitenwand des Hohlraumes zur anderen Seitenwand erstrecken. Ein solcher Handgriff ist sehr handsympathisch und außerdem von großer Stabilität.

Bei diesem Flaschenträger dient es der Vergrößerung der Stabilität, wenn die Halbsäulen mit steigender Entfernung vom Boden konvergieren.

Für die stabile Stellung der in der Mitte des Flaschenträgers neben dem Handgriff stehenden Flaschen ist es vorteilhaft, wenn in Verlängerung der Halbsäulen oder an den Fachwänden dicht neben den Halbsäulen ebene Vorsprünge anstelle von durchgehenden Fachwänden angeordnet sind.

Der weiteren Vergrößerung der Stabilität dieses Flaschenträgers dient es, wenn an den Innenseiten der Außenwände des Kastens im Querschnitt dreieckförmige Säulen angeordnet sind, an denen die Innenwände befestigt sind.

Dabei ist es für das leichtere Hineinstellen von Flaschen in den Flaschenträger vorteilhaft, wenn die Säulenstümpfe oben nach außen hin abgeschrägt sind.

Zur Vergrößerung der Federwirkung und zur Erleichterung des Einstellens der Flaschen in den Flaschenträger ist es von Vorteil, wenn die Säulenstümpfe axial geschlitzt sind.

Dabei ist es zweckmäßig, wenn die Säulenstümpfe an einer Stelle angeordnet sind, wo sie nicht mit dem Boden verbunden sind.

Das aus mindestens zwei Teilen bestehende Formwerkzeug zur Herstellung dieses einstückig aus Kunststoff hergestellten Flaschenträgers in Form eines für zwei Reihen von Flaschen konzipierten Kastens mit einem von zwei durch Flaschenfachwände abgestützten, am Boden befestigten Säulen getragenen Handgriff zeichnet sich dadurch aus, dass die Säulen jede in ihrem unteren Teil die Form einer nicht geschlossenwandigen Halbsäule haben und im oberen Teil in die Form einer geschlossenwandigen Säule übergehen, an die der Handgriff angeformt ist, und dass an dem einen Formteil ein Schwert von mindestens der Breite des Handgriffes angeordnet ist, welches an den Schmalseiten die Konturen der Halbsäulen trägt, welches in Höhe der Fachwände zwei Zapfen zur Formung der den Handgriff tragenden Säulen und zwischen den Zapfen einen den Handgriff mit seinen Lamellen formenden Kamm trägt.

Das Wesen der Erfindung ist nachstehend anhand eines in der Zeichnung schematisch dargestellten Ausführungsbeispiels näher erläutert. Es zeigen:

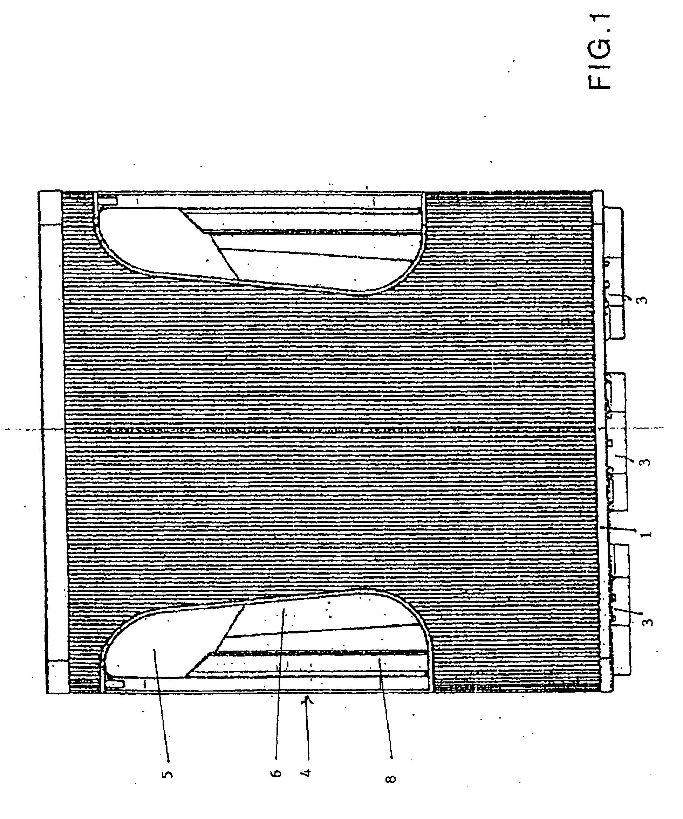

- Fig. 1: eine Ansicht der Längsseite des Flaschenträgers von außen,

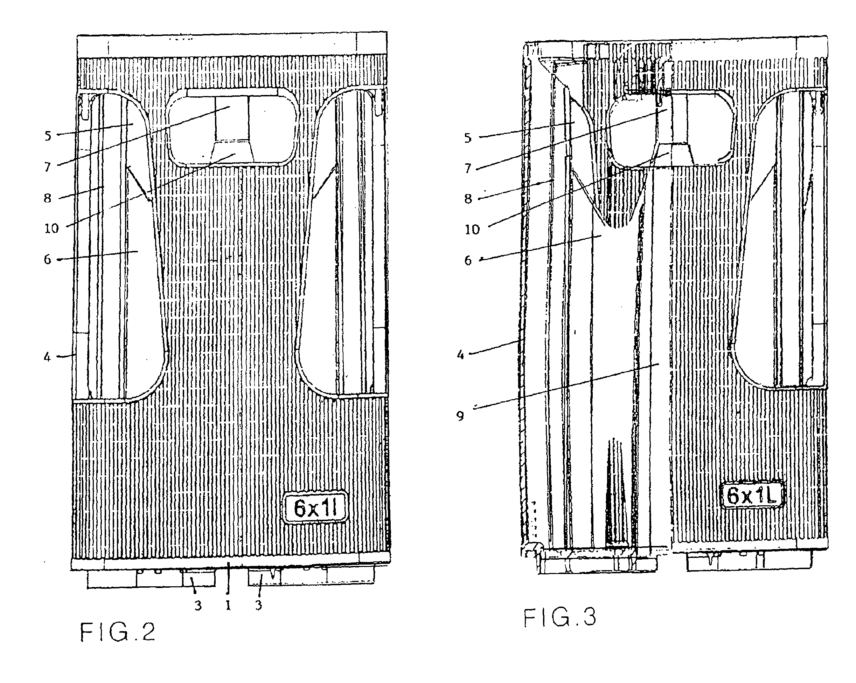

- Fig. 2: eine Ansicht der Breitseite des Flaschenträgers von außen.
- Fig. 3: in der linken Hälfte einen Schnitt durch den Flaschenträger.
- Fig. 4: eine Ansicht von oben auf den Flaschenträger.
- Fig. 5: eine Ansicht der Unterseite des Flaschenträgers.

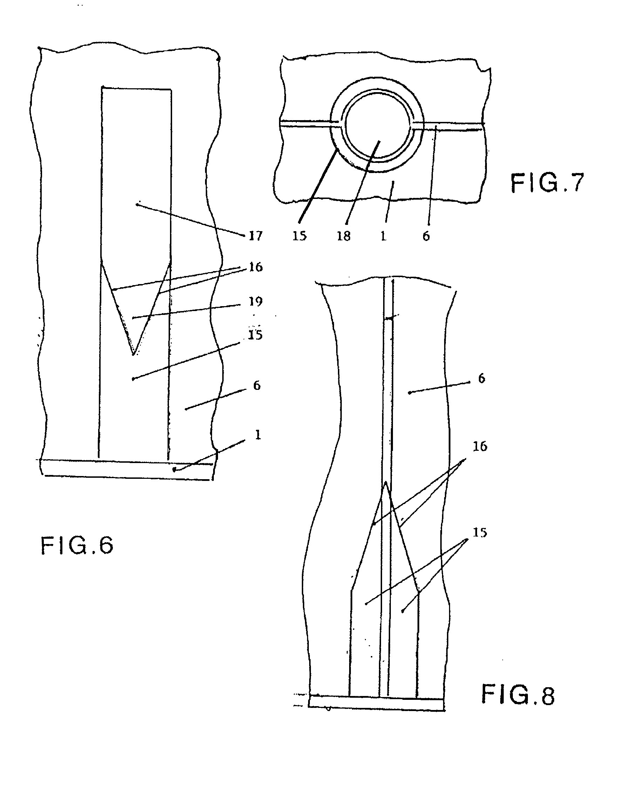

- Fig. 6: eine stark vergrößerte Ansicht einer Verdrehsperre.
- Fig. 7: eine Draufsicht auf die Verdrehsperre.
- Fig. 8: eine Seitenansicht der Verdrehsperre.

Der Flaschenträger weist einen Boden unter den einzelnen Flaschenfächern 2 Füße 3 und geriffelte Seitenwände 4 auf, die an den Ecken mit Fenstern 5 versehen sind. Fachwände 6 unterteilen den Innenraum des Flaschenträgers in sechs Flaschenfächer 2. Die Fachwände 6 sind an den Seitenwänden des Flaschenträgers über im Querschnitt dreieckförmige Säulen 8 angeformt, die den Übergang von der Seitenwand 4 in die Fachwand 6 bilden. In der Mitte des Flaschenträgers befindet sich der Handgriff 7, der von zwei am Boden 1 befestigten Säulen 9 getragen wird. Diese sind sich nach oben verjüngende Rohrhalbschalen, die von drei Seiten durch an sie angeformte Fachwände 6 gestützt werden. Oberhalb der sie stützenden Fachwände 6 gehen die langen halbschalenförmigen Säulen 9 in ringsum geschlossene Säulenstümpfe 10 über, an denen der Handgriff 7 angeformt ist.

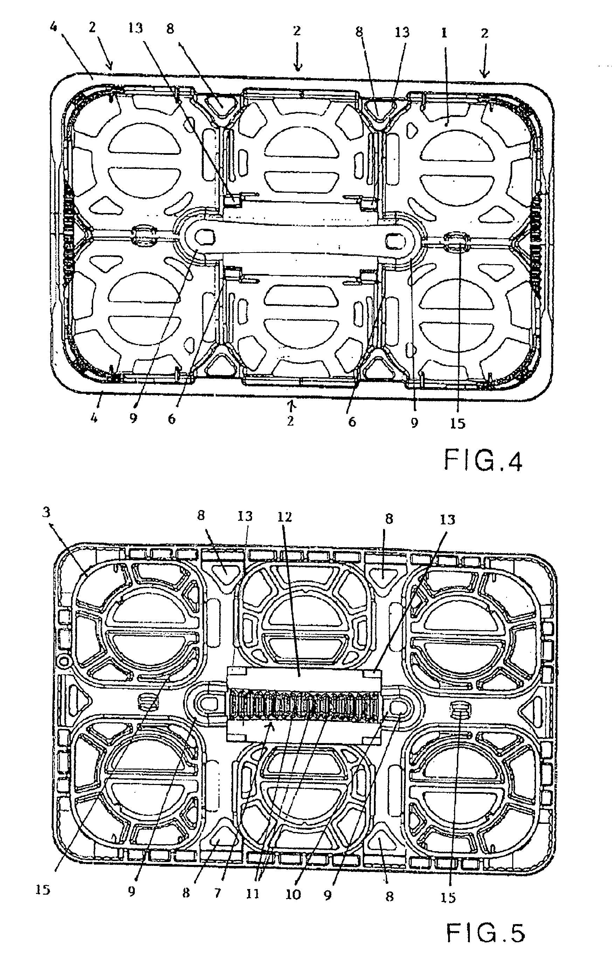

Der Handgriff 7 besteht aus einem U-förmigen glatten Profilstab, in dessen Innenraum diesen Innenraum querende Lamellen 11 eingeformt sind (sichtbar von der Unterseite Fig.5).

Unter dem Handgriff 7 befindet sich im Boden 1 des Flaschenträgers eine relativ breite Öffnung 12, durch die während des Spritzgusses das Formschwert gegriffen hat, um die halbschalenförmigen Säulen 9, die Säulenstümpfe 10 und den Handgriff 7 mitsamt den Lamellen 11 zu formen.

Damit die in der Mitte des Flaschenträgers stehenden zwei Flaschen nicht aneinander schlagen können, sind an den Fachwänden 6 angeformte Wandteile 13 in den Ecken der Bodenöffnung 12 vorgesehen.

Damit in den Ecken des Flaschenträgers stehende Flaschen sich nicht durch Transporterschütterungen verdrehen können, ist in die Fachwände eine Verdrehsicherung eingebaut. Diese besteht aus einem in die den Flaschenträger in zwei Hälften teilenden Fachwand eingeformten Hohlzylinder 15 über einem Bodenloch 18 unter einer Ausnehmung 17 der Fachwand 6. Die Oberkante dieses Hohlzylinders 15 weist in jedem der beiden Flaschenfächer einen spitzwinkligen Ausschnitt 19 auf, so dass sich als Oberkante zwei auf einander zulaufende Schrägflächen 16 gebildet haben.

### Liste der Bezugszeichen

- 1.: Boden
- 2.: Flaschenfach
- 3.: Fuß
- 4.: Seitenwand
- 5.: Fenster
- 6.: Fachwand
- 7.: Handgriff
- 8.: dreieckförmige Säule
- 9.: Säule
- 10.: Säulenstumpf
- 11.: Lamelle
- 12.: Öffnung im Boden
- 13.: Wandteile
- 15.: Verdrehsicherung
- 16.: Schrägfläche
- 17.: Aussparung
- 18.: Bodenloch
- 19.: spitzwinkliger Ausschnitt

## Patentansprüche

1. Einstückig aus Kunststoff hergestellter Flaschenträger in Form eines für zwei Reihen von Flaschen konzipierten Kastens mit einem von zwei durch Flaschenfachwänden abgestützten, am Boden (1) befestigten Säulen (9) getragenen Handgriff (7),
wobei mittig in Richtung der Längsachse angeordnet im Boden (1) eine unter dem Handgriff (7) liegende längliche Ausnehmung (12) angeordnet ist, und wobei an den beiden in der Längsachse des Kastens liegenden Enden dieser Ausnehmung (12) zwei den Handgriff (7) an ihren oberen Enden tragenden Halbsäulen (9) angeordnet sind, die jede in ihrem oberen Teil in die Form einer geschlossenwandigen Säule (9) übergehen, an die der Handgriff (7) angeformt ist; **dadurch gekennzeichnet**
**dass** an oder neben den den Handgriff tragenden Halbsäulen in Bodennähe im Querschnitt halbkreisförmige Säulenstümpfe (10) angeordnet sind, deren Wandungsstärke so bemessen ist, dass sie federn, und die in den Ecken dieses Flaschenträgers stehenden Flaschen verdrehungssicher auf ihren Plätzen halten.

2. Flaschenträger nach Anspruch 1,
**dadurch gekennzeichnet,**
**dass** der Handgriff (7) die Form eines nach unten offenen U hat, dessen innerer Hohlraum durch parallel angeordnete Lamellen (11) gefüllt ist, die sich von einer Seitenwand des Hohlraumes zur anderen Seitenwand erstrecken.

3. Flaschenträger nach Anspruch 1,
**dadurch gekennzeichnet,**
**dass** die Halbsäulen (9) mit steigender Entfernung vom Boden (1) konvergieren.

4. Flaschenträger nach Anspruch 1.
**dadurch gekennzeichnet,**
**dass** an den Innenseiten der Außenwände des Kastens im Querschnitt dreieckförmige Säulen angeordnet sind, in denen die Innenwände befestigt sind.

5. Flaschenträger nach Anspruch 1,
**dadurch gekennzeichnet,**
**dass** die Säulenstümpfe (10) oben nach außen abgeschrägt sind.

6. Flaschenträger nach Anspruch 1,
**dadurch gekennzeichnet**
**dass** die Säulenstümpfe (10) axial geschlitzt sind.

7. Flaschenträger nach Anspruch 1,
**dadurch gekennzeichnet**
**dass** die Säulenstümpfe (10) an einer Stelle angeordnet sind, wo sie nicht mit dem Boden (1) verbunden sind.

8. Aus mindestens zwei Teilen bestehendes Formwerkzeug zur Herstellung eines einstückig aus Kunststoff hergestellten Flaschenträgers in Form eines für zwei Reihen von Flaschen konzipierten Kastens mit einem von zwei durch Flaschenfachwänden abgestützten, am Boden (1) befestigten Säulen (9) getragenen Handgriff (7), wobei an oder neben den den Handgriff tragenden Halbsäulen in Bodennähe im Querschnitt halbkreisförmige Säulenstümpfe (10) angeordnet sind, deren Wandungsstärke so bemessen ist, dass sie federn, und die in den Ecken des Flaschenträgers stehenden Flaschen verdrehungssicher auf ihren Plätzen halten,
wobei an dem einen Formteil ein Schwert von mindestens der Breite des Handgriffes (7) angeordnet ist, welches an den Schmalseiten die Konturen der Halbsäulen (9) trägt,
welches in Höhe der Fachwände zwei Zapfen zur Formung der den Handgriff (7) tragenden Säulen (9) und zwischen den Zapfen einen den Handgriff (7) mit seinen Lamellen (11) formenden Kamm trägt.

## Claims

1. A bottle carrier integrally formed of plastic produced in the shape of a crate, which is designed to accommodate two rows of bottles, comprising a handle (7), which is supported by means of two columns (9), which are supported by means of bottle compartment walls and which are attached to the bottom (1),
wherein an elongate recess (12), which is located underneath the handle (7), is arranged in the bottom (1) in the center in the direction of the longitudinal axis, and
wherein two semicolumns (9), which support the handle (7) on their upper ends, are arranged on the two ends of this recess (12), which are located in the longitudinal axis of the crate, with both of said semicolumns, at their upper part, merging into the shape of a column (9) with closed walls, to which the handle (7) is integrally molded, **characterized in that** column stubs (10), which have a semicircular cross section and the wall thickness of which is dimensioned such that they are resilient and such that they hold the bottles located in the corners of this bottle carrier in place in a twist-proof manner, are arranged on or next to the semicolumns, which support the handle, in the proximity of the bottom.

2. The bottle carrier according to claim 1,
**characterized in**
**that** the handle (7) has the shape of a U, which is open at the bottom, the inner cavity of which is filled by means of ribs (11), which are arranged in parallel and which extend from a side wall of the cavity to the other side wall.

3. The bottle carrier according to claim 1,
**characterized in**
**that** the semicolumns (9) converge with increasing distance from the bottom (1).

4. The bottle carrier according to claim 1,
**characterized in**
**that** columns, the cross section of which is triangular and in which the inner walls are attached, are arranged on the inner side of the outer walls of the crate.

5. The bottle carrier according to claim 1,
**characterized in**
**that** the column stubs (10) are beveled outwardly on the top.

6. The bottle carrier according to claim 1,
**characterized in**
**that** the column stubs (10) are slotted axially.

7. The bottle carrier according to claim 1,
**characterized in**
**that** the column stubs (10) are arranged at a location, where they are not connected to the bottom (1).

8. A moulding tool consisting of at least two pieces for producing a bottle carrier integrally formed of plastic produced in the shape of a crate, which is designed to accommodate two rows of bottles, comprising a handle (7), which is supported by means of two columns (9), which are supported by means of bottle compartment walls and which are attached to the bottom (1), wherein column stubs (10), which have a semicircular cross section and the wall thickness of which is dimensioned such that they are resilient and such that they hold the bottles located in the corners of this bottle carrier in place in a twist-proof manner, are arranged on or next to the semicolumns, which support the handle, in the proximity of the bottom,
wherein a blade, which has at least the width of the handle (7) and which supports the contours of the semicolumns (9) at the narrow sides, is arranged on the molded part,
which, at the level of the compartment walls, supports two journals for forming the columns (9), which support the handle (7), and, between the journals, supports a comb, which forms the handle (7) with its ribs (11).

## Revendications

1. Porte-bouteilles réalisé en matière plastique d'une seule pièce sous la forme d' un casier conçu pour deux rangées de bouteilles avec une poignée (7) portées par deux colonnes (9) soutenues par des parois de cases à bouteilles et fixées sur le fond (1),
dans lequel un évidement oblong (12) situé au-dessous de la poignée (7) est ménagé dans le fond (1), au milieu de celui-ci dans la direction de l'axe longitudinal, et
dans lequel au niveau des deux extrémités de cet évidement (12), situées dans l'axe longitudinal du casier, sont agencées deux demi-colonnes (9) qui portent la poignée (7) à leurs extrémités supérieures et qui se transforment chacune dans leur partie supérieure pour prendre la forme d'une colonne (9) à parois fermées sur laquelle est conformée la poignée (7) ;
**caractérisé en ce que**
des moignons de colonne (10) à section semi-circulaire sont agencés au voisinage du fond, sur ou à côté des demi-colonnes qui portent la poignée, et présentent une épaisseur de paroi choisie de telle manière qu'ils font effet de ressorts, et maintiennent les bouteilles debout dans les coins de ce porte-bouteilles, à leurs emplacements, de façon bloquée en rotation.

2. Porte-bouteilles selon la revendication 1, **caractérisé en ce que** la poignée (7) possède la forme d'un U ouvert vers le bas, dont la cavité intérieure est remplie par des lamelles (11) disposées parallèlement, lesquelles s'étendent depuis une paroi latérale de la cavité jusqu'à l'autre paroi latérale.

3. Porte-bouteilles selon la revendication 1, **caractérisé en ce que** les demi-colonnes (9) convergent au fur et à mesure qu'elles s'éloignent du fond (1).

4. Porte-bouteilles selon la revendication 1, **caractérisé en ce que** des colonnes à section de forme triangulaire sont agencées sur les côtés intérieurs des parois extérieures du casier, colonnes dans lesquelles les parois intérieures sont fixées.

5. Porte-bouteilles selon la revendication 1, **caractérisé en ce que** les moignons de colonne (10) sont biseautés en haut vers l'extérieur.

6. Porte-bouteilles selon la revendication 1, **caractérisé en ce que** les moignons de colonne (10) sont fendus axialement.

7. Porte-bouteilles selon la revendication 1, **caractérisé en ce que** les moignons de colonne (10) sont agencés à un emplacement où ils ne sont pas reliés au fond (1).

8. Outil de moulage constitué d'au moins deux pièces pour la fabrication d'un porte-bouteilles fabriqué en matière plastique d'une seule pièce, sous la forme d'un casier conçu pour deux rangées de bouteilles avec une poignée (7) portées par deux colonnes (9) soutenues par des parois de cases à bouteilles et fixées sur le fond (1), et des moignons de poignée (10) à section semi-circulaire agencés au voisinage du fond sur ou à côté des demi-colonnes qui portent la poignée, et présentant une épaisseur de paroi choisie de telle manière qu'ils font effet de ressorts, et maintiennent les bouteilles debout dans les coins de ce porte-bouteilles, à leurs emplacements, de façon bloquée en rotation,
dans lequel sur l'une des pièces du moule est agencée une lame présentant au moins la largeur de la poignée (7), qui porte sur les petits côtés les contours des demi-colonnes (9), et qui porte, à la hauteur des parois de cases, deux tenons pour la formation des colonnes (9) portant la poignée (7), et entre les tenons, un peigne qui forme la poignée (7) avec ses lamelles (11).
